# EUROPEAN PATENT APPLICATION

(11) **EP 1 193 038 A2**
(43) Date of publication of application: **03.04.2002**
(21) Application number: 01121406.1
(22) Date of filing: 07.09.2001
(51) Int. Cl.: B27L 11/00, F16P 3/00

(54) **Brush chipper with lower feed stop member**

(30) Priority: 27.09.2000 US 671392
(71) Applicant: Vermeer Manufacturing Company, Pella, IA 50219-0200 (US)
(72) Inventor: Tolman, Randy W., Pella, Iowa 50219 (US); Van Zee, Michael D., Pella, Iowa 50219 (US); Bouwers, John T.B., Pella, Iowa 50219 (US)
(74) Representative: Moinas, Michel

(57) **Abstract**

A brush chipper having a frame with cutting members operably attached thereon for cutting tree branches. At least one rotary member is operably mounted to the frame for pulling the tree branches into the chipper and delivering the branches to the cutting members. A feed table is operably attached to the frame for selective movement between a transport position and an operative position for supporting the branches and guiding the branches toward the rotary member and ultimately to the cutting members. A lower feed stop member is operably attached at a first place and a second place to the feed table. The lower feed stop member has a forward and a rearward position. First and second biasing members are attached to the lower feed stop member at the first place and the second place respectively to bias the lower feed stop member to the rearward position thereof. A shutoff mechanism including a first switch operably attached to the feed table and to the lower feed stop member is provided for shutting off rotation of the rotary member of the feed table when the lower feed stop member is moved from the rearward position to the forward position.

## Description

### CROSS-REFERENCE TO RELATED APPLICATIONS

Not Applicable

### STATEMENT REGARDING FEDERALLY SPONSORED RESEARCH OR DEVELOPMENT

Not Applicable

### BACKGROUND OF THE INVENTION

### Field of the Invention

The present invention relates generally to brush chippers which have a manually controlled upper feed stop member and a lower feed stop member which serves to shut off the feed mechanism of the brush chipper when it moved forwardly by predetermined distance or angle. The lower feed stop member of the present invention is mounted with a floating pivot arrangement rather than at a fixed pivot.

### Description of the Related Art

Some prior art brush chippers have only a manually controlled upper feed stop member. Other prior art brush chippers, particularly those used in Europe, have a lower feed stop member. This lower feed stop member is disposed just below the feed table and typically is pivotally attached on a fixed pivot to the frame or the feed table and has a forward and rearward position, "forward" being the front one considering the directional flow of the brush through the machine and "rearward" being the place where the brush enters the feed table.

A lower feed stop bar which is pivotally attached along a fixed pivotal axis requires less force to actuate the bar the farther away from the axis that a force is applied. Conversely, relatively more force is required to actuate the bar the closer the force being applied is to the pivotal axis. Accordingly, a floating pivot arrangement using at least a pair of springs with a shut off switch disposed therebetween is contemplated as being an improvement over a fixed pivot arrangement.

Those concerned with these and other problems recognize the need for an improved lower feed stop member on a brush chipper.

### BRIEF SUMMARY OF THE INVENTION

The present invention relates to a brush chipper having a frame with cutting members operably attached thereon for cutting tree branches. At least one rotary member is operably mounted to the frame for pulling the tree branches into the chipper and delivering the branches to the cutting members. A feed table is operably attached to the frame for selective movement between a transport position and an operative position for supporting the branches and guiding the branches toward the rotary member and ultimately to the cutting members.

A lower feed stop member is operably attached at a first place and a second place to the feed table. The lower feed stop member has a forward and a rearward position. First and second biasing members are attached to the lower feed stop member at the first place and the second place respectively to bias the lower feed stop member to the rearward position thereof. A shutoff mechanism, including a first switch operably attached to the feed table and to the lower feed stop member, is provided for shutting off rotation of the rotary member of the feed table when the lower feed stop member is moved from the rearward position to the forward position thereof.

In a preferred embodiment the left side and right side of the feed table both have biasing members for connecting the lower feed stop member to the feed table and biasing the lower feed stop member to the rearward position thereof, i.e. a four point mounting arrangement. Switches on the left and right side of the feed table are provided so that anything pushing a predetermined amount on either side or the bottom of the lower feed stop member will stop the feed rollers.

### BRIEF DESCRIPTION OF THE SEVERAL VIEWS OF THE DRAWINGS

FIG. 1 is a partial perspective view of a brush chipper constructed in accordance with the present invention and showing someone feeding a small tree having limbs extending therefrom into the rear end thereof;
FIG. 2 is a perspective view of a feed table with a lower feed stop member constructed in accordance with the present invention attached thereto;
FIG. 3 is an enlarged partial perspective view of one side of the lower feed stop member shown in FIGS. 1 and 2;
FIG. 4 is an enlarged partial perspective view of a preferred embodiment of the resilient mounting structure of the present invention shown in FIGS. 1-3; and
FIG. 5 is a schematic view of the pertinent aspects of the electrical and hydraulic system of the present invention.

### DETAILED DESCRIPTION OF THE INVENTION

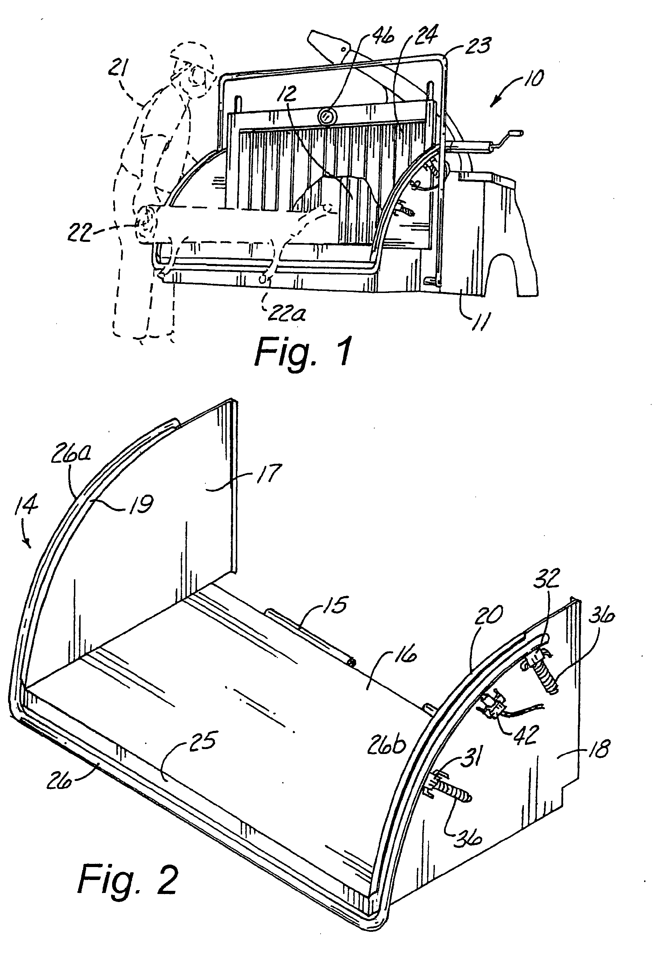

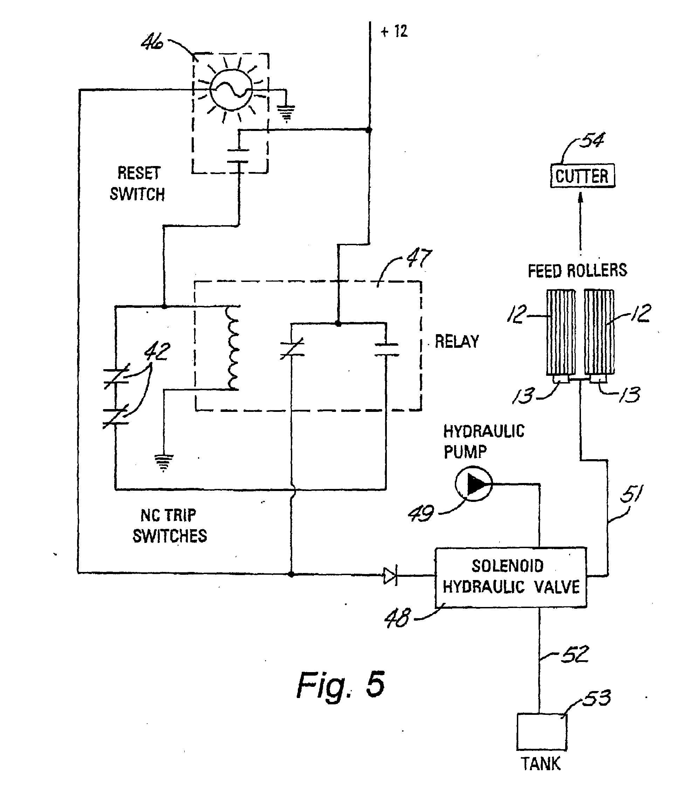

Referring now to the drawings, wherein like reference numerals designate identical or corresponding parts throughout the several views, FIG. 1 shows a brush chipper (10) constructed in accordance with the present invention and having a frame (11). Feed rollers (12) are rotatably mounted to the frame (11) and are rotatably controlled by reversible hydraulic motors (13) shown in FIG. 5. A feed table (14) is pivotally attached to the frame (11) by hinges (15) shown in FIG. 2. The feed table (14) has a bottom wall (16) and side walls (17) and (18) with top edges (19) and (20) and a rear edge (25).

The feed table (14) is shown in its operative position in FIGS. 1 and 2 and in FIG. 1 shows a person (21) in dashed lines feeding a small tree (22) having limbs (22a) extending therefrom onto the top of feed table portion (16) and being pulled into the brush chipper (10) by rollers (12) which are rotating when the upper feed control member (23) is pulled rearwardly, stopped when the feed control lever (23) is straight up and reversed when the upper feed control lever (23) is pushed forwardly. A plastic curtain (24), which consists of a plurality of narrow strips of plastic material, keep pieces of the tree (22) from flying backwardly towards the operator (21).

A lower feed control bar (26) conforms at the bottom to rear lip (25) of the feed table and on each side this lower feed control member is curved at portions (26a) and (26b) to conform to the edges (19) and (20), respectively, of the feed table (14).

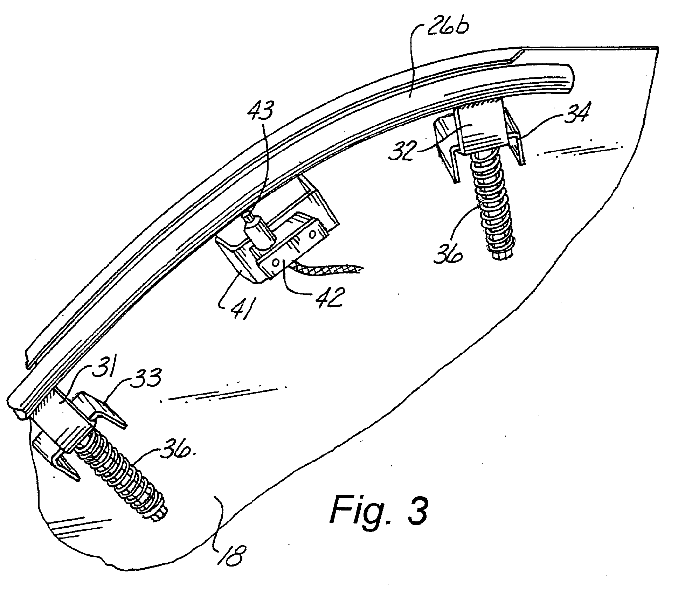

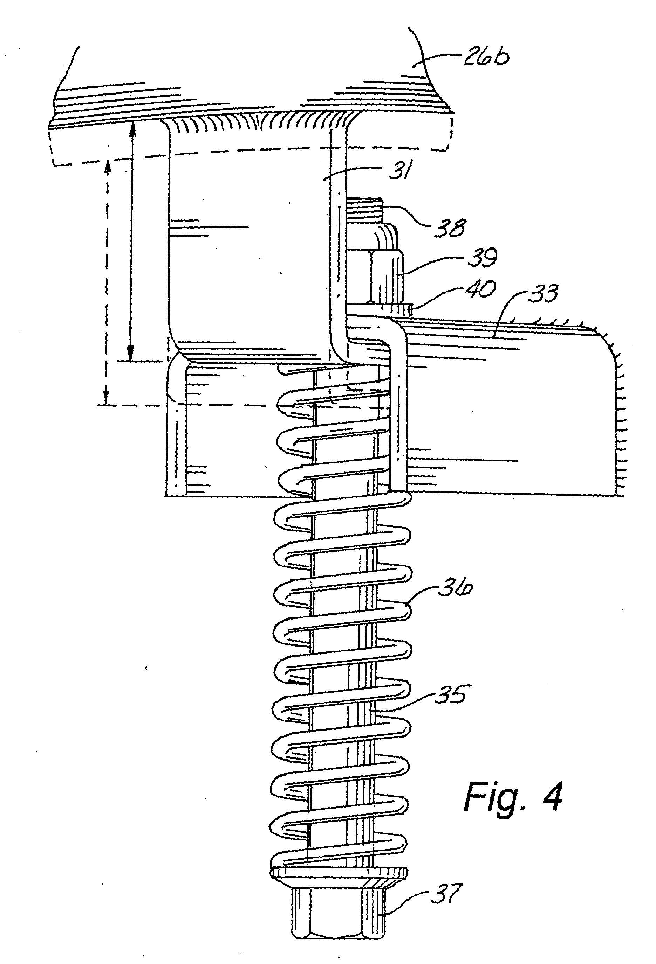

Referring to FIGS. 3 and 4 it is noted that the lower feed control member (26b) has flanges (31) and (32) welded thereto. Also U-shaped flanges (33) and (34) are welded to side member (18) of the feed table (14). A bolt (35) extends through an opening (not shown) in flanges (31) and (33) and a helical compression spring (36) pushes the flange (31) to the solid line position shown in FIG. 4 but allows it to move to a second position shown in dashed lines in FIG. 4 when the lower feed stop member (26) and (26b) are pushed by a limb (22a) anywhere around the periphery of the feed table, for example, along edges (19), (20) and (25). The bolt (35) has a head (37) at the bottom thereof and threads (38) at the top thereof. A nut (39) and washer (40) holds the spring (36) in place as shown in FIG. 4 in combination with bolt (35).

Referring again to FIG. 3, it is noted that a flange (41) is welded to the side (18) of the feed table (14) and has a normally closed switch (42) thereon. Switch (42) has a plunger (43) which is spring biased to the position shown in FIG. 3. When the lower feed stop member (26) is pushed significantly at any position from the bottom thereof, as shown in FIG. 2, to a side portion thereof, for example, at (26b) shown in FIG. 3, the portion (26b) will push against the plunger (43) thereby opening the switch (42) and causing a relay (47) to actuate a solenoid hydraulic valve (48) and to ultimately shut off the feed rollers (12) as will be explained in more detail below.

Referring now to FIG. 5, a schematic electrical and hydraulic drawing shows the normally closed trip switches (42) which are on the left and right side of the feed table (and not just on the side shown in FIGS. 1, 2 and 3). In other words, the other side of the feed table adjacent wall (17) would have a mirror image of what is seen on the wall (18) along with the corresponding structure of spring mountings and switches. A reset switch (46) can also be seen in FIG. 1 and includes a light which is illuminated when the lower feed control member (26) opens one or both of the normally closed trip switches (42) and stops the feed rollers (12).

When the normally closed trip switches (42) are opened, a signal is sent to the relay (47) which activates an electrical solenoid valve (48), which is normally biased to provide a path of high pressure hydraulic oil from hydraulic pump (49) through the valve (48) and line (51) to reversible hydraulic motors (13) for controlling feed rollers (12). But when the normally closed trip switches (42) actuate the relay, which in turn actuates the solenoid hydraulic valve (48), this causes the flow to change from line (51) to line (52). This dumps the hydraulic fluid into tank (53), thereby stopping the feed rollers (12). Once everything has been cleared, for example, by moving the branch (22a) from small tree (22) from against the lower feed stop member (26), then the operator can push the reset switch (46), wherein the light will go off and solenoid hydraulic valve (48) will again cause flow to go from the hydraulic pump (49) to line (51) and feed rollers (12).

Since it forms no part of this invention, the hydraulic system for upper feed control member (23), which would be in line (51) in a preferred embodiment, is not shown. Similarly, in FIG. 5, the cutter assembly (54) is shown merely to illustrate where the trees and branches go after they are pulled into the brush cutter (10) through feed rollers (12).

Obviously, many modifications and variations of the present invention are possible in light of the above teachings. It is therefore to be understood that, within the scope of the appended claims, the invention may be practiced otherwise than as specifically described.

## Claims

1. A brush chipper comprising:
a frame;
cutting members for cutting tree branches operatively attached to said frame;
at least one rotary member operably mounted to said frame for pulling said tree branches in to be cut into smaller pieces and delivering said branches to said cutting members to cut the branches into smaller pieces;
a feed table operably attached to said frame for selective movement between a transport position and an operative position for supporting said branches and guiding said branches toward said rotary member, said feed table having a first side edge, a second side edge, a front end and a rear end, said front end being adjacent to said rotary member;
a lower feed stop member operatively attached at a first place and a second place to said feed table, said lower feed stop member having a forward position and a rearward position;
first and second biasing members attached to said lower feed stop member at said first place and said second place respectively to bias said lower feed stop member said rearward position thereof;
a shut off mechanism including a first switch operatively attached to said feed table and to said lower feed stop member between said first place and second place on said feed table for shutting off the rotation of the rotary member when said lower feed stop member is moved from said rearward position to said forward position, whereby when said lower feed stop member moves to said forward position, the shut off mechanism will stop the rotary member.

2. The brush chipper of claim 1 wherein said first and second place is on the first side edge of said feed table;
said lower feed stop member is also attached to said feed table at a third place and a fourth place on said second side edge of said feed table;
third and fourth biasing members attached to said lower feed stop member at said third place and fourth place respectively to further bias said lower feed stop member said rearward position thereof; and
said shut off mechanism also including a second switch operatively attached to said feed table and to said lower feed stop member for shutting off the rotation of the rotary member when said lower feed stop member is moved from the rearward position to the forward position, whereby when said lower feed stop member moves to the forward position, the shut off mechanism will stop the rotary member.

3. The brush cutter of claim 2 wherein said biasing members comprise compression springs.

4. The brush cutter of claim 3 wherein said biasing members are helical in shape.
